# EUROPEAN PATENT APPLICATION

(11) **EP 2 562 388 A2**
(43) Date of publication of application: **27.02.2013**
(21) Application number: 12180642.6
(22) Date of filing: 16.08.2012
(51) Int. Cl.: F02C 3/34, F02C 6/08

(54) **Power plant and method of operation**

(30) Priority: 25.08.2011 US 201113217359
(71) Applicant: General Electric Company, Schenectady, NY 12345 (US)
(72) Inventor: Wichmann, Lisa Anne, Greenville, SC South Carolina 29615 (US)
(74) Representative: Cleary, Fidelma

(57) **Abstract**

A power plant comprises at least one main air compressor (12) and at least one gas turbine assembly. The assembly comprises a turbine combustor (32) for mixing compressed ambient gas flow (26) with a recirculated low oxygen content gas flow (50) and a fuel stream (28) to form a combustible mixture for burning to form the recirculated low oxygen content flow (50). A recirculation loop (52) recirculates the recirculated low oxygen content gas flow (50) from the turbine (34) to the turbine compressor (30). An integrated inlet bleed heat conduit (44) fluidly connects the at least one gas turbine assembly to an input of the at least one main air compressor (12) and delivers at least a portion of the recirculated low oxygen content gas flow (50) from the at least one gas turbine assembly to the input of the at least one main air compressor (12).

## Description

### BACKGROUND OF THE INVENTION

The subject matter of the present disclosure relates generally to the field of electric power plants, and more particularly to methods of operating stoichiometric exhaust gas recirculation turbine systems. Various types of gas turbine systems are known and in use for electricity generation in power plants. Typically, the gas turbine systems include a turbine compressor for compressing an air flow and a turbine combustor that combines the compressed air with a fuel and ignites the mixture to generate an exhaust gas. The exhaust gas may then be expanded through a turbine, thereby causing the turbine to rotate, which in turn may be connected to a turbine generator via a turbine shaft, for power generation. Gas turbines have traditionally used excess air within the combustion process to control turbine temperatures and manage undesirable emissions. This often results in an exhaust stream with large amounts of excess oxygen.

Accordingly, there exists a need for a power plant arrangement that uses a gas turbine system that may operate without an exhaust stream with large amounts of excess oxygen. Furthermore, it would be desirable for the power plant arrangement to provide for the option to further reduce emissions through treatment of exhaust gases and/or to recover streams of carbon dioxide, nitrogen, and water.

### Brief Description of the Invention

In one aspect, a power plant arrangement is provided. The power plant arrangement includes at least one main air compressor for compressing ambient air into a compressed ambient gas and at least one gas turbine assembly. The gas turbine assembly comprises a turbine combustor, fluidly connected to the at least one main air compressor, for mixing the compressed ambient gas with at least a first portion of a recirculated low oxygen content gas flow and a fuel stream to form a combustible mixture and for burning the combustible mixture and forming the recirculated low oxygen content flow. The gas turbine assembly further comprises a turbine connected to the turbine combustor and to a turbine shaft. The turbine is arranged to be driven by the recirculated low oxygen content gas flow from the turbine combustor. The assembly further comprises a turbine compressor, fluidly connected to the turbine combustor, and connected to the turbine shaft and being arranged to be driven thereby. The assembly also comprises a recirculation loop for recirculating the recirculated low oxygen content gas flow from the turbine to the turbine compressor. Finally, the assembly comprises an integrated inlet bleed heat conduit that fluidly connects the at least one gas turbine assembly to an input of the at least one main air compressor for delivering at least a second portion of the recirculating low oxygen content gas flow from the at least one gas turbine assembly to the input of the at least one main air compressor.

In another aspect, a method for operating a power plant is provided. The method includes compressing ambient air with at least one main air compressor to form a compressed ambient gas flow, delivering the compressed ambient gas flow to a turbine combustor of at least one gas turbine assembly, and mixing the compressed ambient gas flow with at least a first portion of a recirculated low oxygen content gas flow and a fuel stream to form a combustible mixture and burning the mixture in the turbine combustor to produce the recirculated low oxygen content gas flow. The method further comprises driving a turbine using the recirculated low oxygen content gas flow, wherein the turbine is connected to a turbine shaft. A turbine compressor, that is fluidly connected to the turbine combustor, is driven by rotation of the turbine shaft. The method also comprises recirculating the recirculated low oxygen content gas flow from the turbine to the turbine compressor using a recirculation loop. Additionally, the method comprises bleeding at least a second portion of the recirculated low oxygen content gas flow from the at least one gas turbine assembly to an input of the at least one main air compressor, using an integrated inlet bleed heat conduit that fluidly connects the at least one gas turbine assembly to the input of the at least one main air compressor.

Additional aspects will be set forth in part in the description that follows, and in part will be obvious from the description, or may be learned by practice of the aspects described below. The advantages described below will be realized and attained by means of the elements and combinations particularly pointed out in the appended claims. It is to be understood that both the foregoing general description and the following detailed description are exemplary and explanatory only and are not restrictive.

### Brief Description of the Drawings

These and other features, aspects, and advantages of the present invention will become better understood when the following detailed description is read with reference to the accompanying drawings, where the components are not necessarily to scale, and in which corresponding reference numerals designate corresponding parts throughout the drawings, wherein:
FIG. 1 is a diagrammatical illustration of an exemplary power plant arrangement 10 in accordance with an embodiment of the present invention.
FIG. 2 is a diagrammatical illustration of another exemplary power plant arrangement 100 in accordance with an embodiment of the present invention.

### Detailed Description of the Invention

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment," "an embodiment," or "embodiments" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment.

Furthermore, the particular features, structures, or characteristics may be combined in any suitable manner in one or more embodiments.

Recent requirements in the power generation industry have necessitated the development of a gas turbine arrangement that may be configured to consume substantially all of the oxygen in the air working fluid to produce an essentially oxygen-free exhaust stream. Such an exhaust stream may be more easily suited to emissions reductions using NOₓ catalysts. Additionally, such an exhaust stream may be better suited to post combustion carbon capture solutions due to the low oxygen concentrations. Furthermore, a largely oxygen-free exhaust stream may be more easily suited to enhanced oil recovery applications.

A substantially oxygen-free exhaust from a gas turbine may be accomplished by stoichiometric burning in the combustion system. That is, the oxygen-containing fresh air supply may be matched to the fuel flow such that the combustion process operates at near combustion stoichiometry.

A stoichiometric combustion reaction of methane and oxygen is illustrated below:

CH₄ + 2 O₂ → CO₂ + 2 H₂O

Stoichiometric combustion results in gas temperatures that may be too high for the materials and cooling technology employed in gas turbine engines. In order to reduce those high temperatures, a portion of the gas turbine exhaust products may be recirculated back to the combustion system to dilute the combustion temperatures. Ideally, this diluent gas should also be significantly oxygen free so as to not introduce additional oxygen into the system and thereby reduce the advantages of stoichiometric combustion. The gas turbine application using stoichiometric combustion and recirculated exhaust gas is referred to as Stoichiometric Exhaust Gas Recirculation (SEGR).

As discussed in detail below, embodiments of the present invention may function to minimize emissions in gas turbine power plant systems by using an SEGR cycle that may enable substantially stoichiometric combustion reactions for power production. The SEGR gas turbine may be configured so as to provide a low oxygen content exhaust. This low oxygen content exhaust may be used with an NOₓ reduction catalyst to provide an exhaust stream that may also be free of NOₓ contaminants.

In some embodiments, an integrated inlet bleed heat may be used to, without being bound to any theory, protect the compressors during start-up and heat the compressor inlets so that a smaller air volume is pulled into the compressors during operation. In some of the specific embodiments, the present technique includes using the SEGR cycle to provide low oxygen content streams of carbon dioxide, nitrogen, and water.

### Power Plant Arrangements

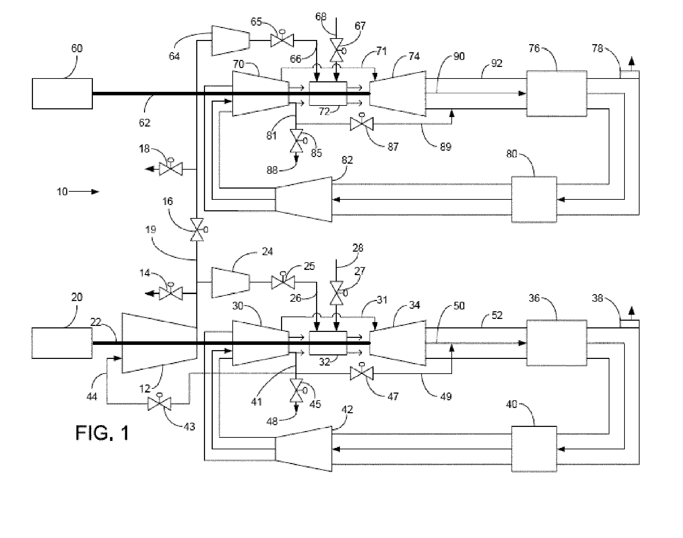

Turning now to the drawings and referring first to FIG. 1 a power plant arrangement 10 is illustrated. The power plant arrangement 10 includes a main air compressor 12 for compressing ambient air into at least a first portion of a compressed ambient gas flow 26. The at least a first portion of the compressed ambient gas flow 26 may be vented to the atmosphere via a variable bleed valve 14. Further, the power plant arrangement 10 includes a turbine combustor 32 that is fluidly connected to the main air compressor 12. The turbine combustor 32 is configured to receive the at least a first portion of the compressed ambient gas flow 26 from the main air compressor 12, at least a first portion of a recirculated low oxygen content gas flow 50 from a turbine compressor 30, and a fuel stream 28, to form a combustible mixture and to burn the combustible mixture to generate the recirculated low oxygen content gas flow 50. The flow of the at least a first portion of the compressed ambient gas flow 26 may be regulated by an air flow valve 25. The flow of the fuel stream 28 may be regulated by a fuel stream valve 27.

In addition, the power plant arrangement 10 includes a turbine 34 located downstream of the turbine combustor 32. The turbine 34 is configured to expand the recirculated low oxygen content gas flow 50 and may drive an external load such as a turbine generator 20 via a turbine shaft 22 to generate electricity. In the illustrated embodiment 10, the main air compressor 12 and the turbine compressor 30 are driven by the power generated by the turbine 34 via the turbine shaft 22.

As illustrated in FIG. 1, in some embodiments, the turbine shaft 22 may be a "cold-end drive" configuration, meaning the turbine shaft 22 may connect to the turbine generator 20 at the compressor end of the turbine assembly. In other embodiments, the turbine shaft 22 may be a "hot-end drive" configuration, meaning the turbine shaft 22 may connect to the turbine generator 20 at the turbine end of the turbine assembly.

As used herein, the term "recirculated low oxygen content gas flow" refers to the gas flow generated by the burning of the combustible mixture in the turbine combustor 32 and flowing through a recirculation loop 52. In some embodiments, the term "low oxygen content" refers to an oxygen content of below about 5 vol%, below about 2 vol%, or below about 1 vol%.

As used herein, the term "gas turbine assembly" refers to all listed components of the power plant arrangements except for the main air compressor 12. In embodiments comprising multiple main air compressors, the term "gas turbine assembly" refers to all listed components of the power plant arrangements except for the multiple main air compressors.

In some embodiments, the recirculated low oxygen content gas flow 50 may be directed from the turbine 34 through the recirculation loop 52 to a heat recovery steam generator 36 for the generation of steam. A steam turbine may be configured to generate additional electricity using the steam from the heat recovery steam generator 36, and the steam turbine may be connected to a steam generator. In some embodiments, the steam turbine may be arranged to be connected to the turbine shaft 22. The recirculated low oxygen content gas flow 50 may then be directed back into the recirculation loop 52 to a recirculated gas flow cooler 40. In still other embodiments, the recirculation loop 52 may not contain a heat recovery steam generator 36 and the recirculated low oxygen content gas flow 50 may instead be introduced directly into the recirculated gas flow cooler 40 upon exit from the turbine 34. In other embodiments, the recirculation loop 52 may not comprise the recirculated gas flow cooler 40.

The recirculated gas flow cooler 40 may be incorporated into the recirculation loop 52 anywhere downstream from the turbine 34. The recirculated gas flow cooler 40 may be configured to lower the temperature of the recirculated low oxygen content gas flow 50 to a suitable temperature for downstream delivery into the turbine compressor 30 via the recirculation loop 52. In some embodiments, a suitable temperature may be below about 66 °C, below about 49 °C, or below about 45 °C.

In some embodiments, the power plant arrangement 10 may include an integrated inlet bleed heat conduit 44 that fluidly connects the gas turbine assembly to an input of the main air compressor 12. The integrated inlet bleed heat conduit 44 may be configured to deliver at least a second portion of the recirculated low oxygen content gas flow 50 from the gas turbine assembly to the input of the main air compressor 12. The flow of the at least a second portion of the recirculated low oxygen content gas flow 50 through the integrated inlet bleed heat conduit 44 may be regulated by an adjustable integrated inlet bleed heat valve 43.

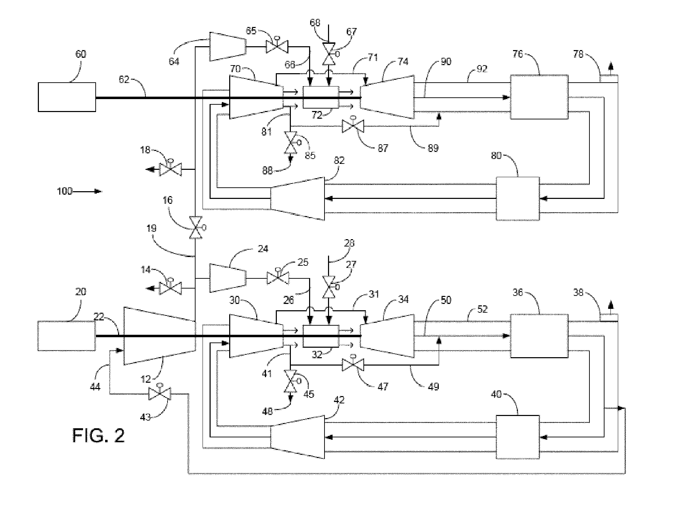

As depicted in FIG. 1, the integrated inlet bleed heat conduit 44 may fluidly connect an output of the turbine compressor 30 to the input of the main air compressor 12. Turning now to FIG. 2, in another embodiment the integrated inlet bleed heat conduit 44 may fluidly connect at least one point in the recirculation loop 52 to the input of the main air compressor 12. In some embodiments, the integrated inlet bleed heat conduit 44 may be connected to the recirculation loop 52 at a point that is upstream of the recirculated gas flow cooler 40. In other embodiments, the integrated inlet bleed heat conduit 44 may be connected to the recirculation loop 52 at a point that is upstream of the heat recovery steam generator 36.

In some embodiments, the gas turbine assembly may further comprise a secondary flow path 31 that delivers at least a third portion of the recirculated low oxygen content gas flow 50 from the turbine compressor 30 to the turbine 34 as a secondary flow. The secondary flow may be used to cool and to seal the turbine 34, including individual components of the turbine 34 such as the turbine shroud, the turbine nozzle, the turbine blade tip, the turbine bearing support housing, and the like. After cooling and sealing the turbine 34 and any individual turbine components, the secondary flow may be directed into the recirculation loop 52 near the output of the turbine 34.

In some embodiments, the power plant arrangement 10 may further comprise a turbine bypass conduit 49 that fluidly connects the output of the turbine compressor 30 with the recirculation loop 52. The turbine bypass conduit 49 may be configured to bypass the turbine combustor 32 with at least a fourth portion of the recirculated low oxygen content gas flow 50 and to deliver a bypass flow of the at least a fourth portion of the recirculated low oxygen content gas flow 50 to the recirculation loop 52 downstream of the turbine 34. In some embodiments, the bypass flow may be regulated by a turbine bypass valve 47.

In some embodiments, the power plant arrangement 10 may further comprise a recirculated gas flow extraction valve 45 located downstream of the turbine compressor 30 and in fluid connection with the at least a fifth portion of the recirculated low oxygen content gas flow 50 via a turbine compressor output flow 41. In some embodiments, the recirculated gas flow extraction valve 45 may be fluidly connected to the turbine bypass conduit 49. In other embodiments, the recirculated gas flow extraction valve 45 may be fluidly connected to the turbine bypass conduit 49 at a point that is either upstream of or downstream from the turbine bypass valve 47. In some embodiments, the recirculated gas flow extraction valve 45 may be fluidly connected to a gas separation system such as a carbon capture sequestration (CCS) system via an exhaust gas extraction point 48. In still other embodiments, the gas separation system may produce a stream of concentrated carbon dioxide and concentrated nitrogen, both with a low oxygen content.

In some embodiments, a booster compressor 24 may be incorporated downstream of and in fluid connection with the main air compressor 12 and upstream of and in fluid connection with the turbine combustor 32. The booster compressor 24 may further compress the compressed ambient gas flow 26 before delivery into the turbine combustor 32.

In still other embodiments, a blower 42 may be fluidly connected to the recirculation loop 52 upstream of or downstream from the recirculated gas flow cooler 40. The blower 42 may be configured to increase the pressure of the recirculated low oxygen content gas flow 50 prior to delivery into the turbine compressor 30 via the recirculation loop 52.

In some embodiments, the main air compressor 12 may further comprise adjustable inlet guide vanes to control the flow of air into the main air compressor 12. Additionally, the turbine compressor 30 may further comprise adjustable inlet guide vanes to control the flow of air into the turbine compressor 30.

In some embodiments, the power plant arrangement 10 may include a damper door 38 connected to the recirculation loop 52. The damper door 38 may be opened to vent a portion of the recirculated low oxygen gas content flow 50 to the atmosphere.

As used herein, the term "slave" is synonymous with the terms secondary, auxiliary, or additional. In the following embodiments, the term "slave" refers to the second of two gas turbine assemblies, but can also mean any additional gas turbine assemblies operated with a main gas turbine assembly such as is the second gas turbine assembly in the following embodiments.

In this embodiment, and as depicted in FIG. 1, the above-described gas turbine assembly may be connected to a slave gas turbine assembly via an inter-train conduit 19 that is regulated by an inter-train valve 16. The main air compressor 12 may compress ambient air into at least a second portion of a compressed ambient gas flow 66 that may be delivered to a slave turbine combustor 72. The at least a second portion of the compressed ambient gas flow 66 may be vented to the atmosphere via a slave variable bleed valve 18.

The slave turbine combustor 72 may be configured to receive the at least a second portion of the compressed ambient gas flow 66 from the main air compressor 12, at least a first portion of a slave recirculated low oxygen content gas flow 90 from a slave turbine compressor 70, and a slave fuel stream 68, to form a slave combustible mixture and to burn the slave combustible mixture to generate the slave recirculated low oxygen content gas flow 90. The flow of the at least a second portion of the compressed ambient gas flow 66 may be regulated by a slave air flow valve 65. The flow of the slave fuel stream 68 may be regulated by a slave fuel stream valve 67.

In addition, a slave turbine 74 may be located downstream of the slave turbine combustor 72. The slave turbine 74 is configured to expand the slave recirculated low oxygen content gas flow 90 and may drive an external load such as a slave turbine generator 60 via a slave turbine shaft 62 to generate electricity.

As illustrated in FIG. 1, in some embodiments, the slave turbine shaft 62 may be a "cold-end drive" configuration, meaning the slave turbine shaft 62 may connect to the slave turbine generator 60 at the compressor end of the turbine assembly. In other embodiments, the slave turbine shaft 62 may be a "hot-end drive" configuration, meaning the slave turbine shaft 62 may connect to the slave turbine generator 60 at the turbine end of the turbine assembly.

As used herein, the term "slave recirculated low oxygen content gas flow" refers to the gas flow generated by the burning of the slave combustible mixture in the slave turbine combustor 72 and flowing through a slave recirculation loop 92. In some embodiments, the term "low oxygen content" refers to an oxygen content of below about 5 vol%, below about 2 vol%, or below about 1 vol%.

In embodiments, the slave recirculated low oxygen content gas flow 90 may be directed from the slave turbine 74 through the slave recirculation loop 92 to a slave heat recovery steam generator 76 for the generation of steam. A slave steam turbine may be further configured to generate additional electricity using the steam from the slave heat recovery steam generator 76, and the slave steam turbine may be connected to a slave steam generator. In some embodiments, the slave steam turbine may be arranged to be connected to the slave turbine shaft 62. The slave recirculated low oxygen content gas flow 90 may then be directed back into the slave recirculation loop 92 to a slave recirculated gas flow cooler 80. In still other embodiments, the slave recirculation loop 92 may not contain a slave heat recovery steam generator 76 and the slave recirculated low oxygen content gas flow 90 may instead be introduced directly into the slave recirculated gas flow cooler 80 upon exit from the slave turbine 74. In other embodiments, the slave recirculation loop 92 may not comprise the slave recirculated gas flow cooler 80.

The slave recirculated gas flow cooler 80 may be incorporated into the slave recirculation loop 92 anywhere downstream from the slave turbine 74. The slave recirculated gas flow cooler 80 may be configured to lower the temperature of the slave recirculated low oxygen content gas flow 90 to a suitable temperature for downstream delivery into the slave turbine compressor 70 via the slave recirculation loop 92. In some embodiments, a suitable temperature may be below about 66 °C, below about 49 °C, or below about 45 °C.

In some embodiments, a slave integrated inlet bleed heat conduit that fluidly connects the slave gas turbine assembly to an input of the main air compressor 12 may be used. The slave integrated inlet bleed heat conduit may be configured to deliver at least a second portion of the slave recirculated low oxygen content gas flow 90 from the gas turbine assembly to the input of the main air compressor 12. The flow of the at least a second portion of the slave recirculated low oxygen content gas flow 90 through the slave integrated inlet bleed heat conduit may be regulated by a slave adjustable integrated inlet bleed heat valve.

The slave integrated inlet bleed heat conduit may fluidly connect an output of the slave turbine compressor 70 to the input of the main air compressor 12. The slave integrated inlet bleed heat conduit may fluidly connect at least one point in the slave recirculation loop 92 to the input of the main air compressor 12. In some embodiments, the slave integrated inlet bleed heat conduit may be connected to the slave recirculation loop 92 at a point that is upstream of the slave recirculated gas flow cooler 80. In other embodiments, the slave integrated inlet bleed heat conduit may be connected to the slave recirculation loop 92 at a point that is upstream of the slave heat recovery steam generator 76.

In some embodiments, the gas turbine assembly further comprises a slave secondary flow path 71 that delivers at least a third portion of the slave recirculated low oxygen content gas flow 90 from the slave turbine compressor 70 to the slave turbine 74 as a slave secondary flow. The slave secondary flow may be used to cool and to seal the slave turbine 74, including individual components of the slave turbine 74 such as the turbine shroud, the turbine nozzle, the turbine blade tip, the turbine bearing support housing, and the like. After cooling and sealing the slave turbine 74 and any individual turbine components, the slave secondary flow may be directed into the slave recirculation loop 92 near the output of the slave turbine 74.

In this embodiment, the power plant arrangement 10 may include a slave turbine bypass conduit 89 that fluidly connects the output of the slave turbine compressor 70 with the slave recirculation loop 92. The slave turbine bypass conduit 89 may be configured to bypass the slave turbine combustor 72 with at least a fourth portion of the slave recirculated low oxygen content gas flow 90 and to deliver a slave bypass flow of the at least a fourth portion of the slave recirculated low oxygen content gas flow 90 to the slave recirculation loop 92 downstream of the slave turbine 74. In some embodiments, the slave bypass flow may be regulated by a slave turbine bypass valve 87.

In embodiments, the power plant arrangement 10 may include a slave recirculated gas flow extraction valve 85 located downstream of the slave turbine compressor 70 and in fluid connection with the at least a fifth portion of the slave recirculated low oxygen content gas flow 90 via a slave turbine compressor output flow 81. In some embodiments, the slave recirculated gas flow extraction valve 85 may be fluidly connected to the slave turbine bypass conduit 89. In other embodiments, the slave recirculated gas flow extraction valve 85 may be fluidly connected to the slave turbine bypass conduit 89 at a point that is either upstream of or downstream from the slave turbine bypass valve 87. In some embodiments, the slave recirculated gas flow extraction valve 85 may be fluidly connected to a slave gas separation system such as a slave carbon capture sequestration (CCS) system via a slave exhaust gas extraction point 88. In still other embodiments, the slave gas separation system may produce a stream of concentrated carbon dioxide and concentrated nitrogen, both with a low oxygen content.

In some embodiments, a slave booster compressor 64 may be incorporated downstream of and in fluid connection with the main air compressor 12 and upstream of and in fluid connection with the slave turbine combustor 72. The slave booster compressor 64 may further compress the at least a second portion of the compressed ambient gas flow 66 before delivery into the slave turbine combustor 72.

In still other embodiments, a slave blower 82 may be fluidly connected to the slave recirculation loop 92 upstream of or downstream from the slave recirculated gas flow cooler 80. The slave blower 82 may be configured to increase the pressure of the slave recirculated low oxygen content gas flow 90 prior to delivery into the slave turbine compressor 70 via the slave recirculation loop 92.

In some embodiments, the slave turbine compressor 70 may further comprise adjustable inlet guide vanes to control the flow of air into the slave turbine compressor 70.

In some embodiments, the power plant arrangement 10 may include a slave damper door 78 connected to the slave recirculation loop 92. The slave damper door 78 may be opened to vent a portion of the slave recirculated low oxygen gas content flow 90 to the atmosphere.

In some embodiments, the power plant arrangement comprises one gas turbine assembly. In other embodiments, the power plant arrangement comprises two or more gas turbine assemblies that are fluidly connected by the inter-train conduit 19. As used herein, the term "inter-train conduit" may refer to any fluid connection between two or more gas turbine assemblies and one or more main air compressors. In still other embodiments, the power plant arrangement comprises three or more gas turbine assemblies and one or more additional main air compressors, wherein the additional main air compressors are in fluid connection with each other and with the gas turbine assemblies. In yet other embodiments, the power plant arrangement is configured for substantially stoichiometric combustion. In still other embodiments, the power plant arrangement is configured for substantially zero emissions power production.

In some embodiments, the fuel stream 28 and/or the slave fuel stream 68 comprises an organic gas, including but not limited to methane, propane, and/or butane. In still other embodiments, the fuel stream 28 and/or the slave fuel stream 68 comprises an organic liquid, including but not limited to methanol and/or ethanol. In yet other embodiments, the fuel stream 28 and/or the slave fuel stream 68 comprises a fuel source obtained from a solid carbonaceous material such as coal.

### Method of Operation

In one embodiment, a method for operating a power plant arrangement 10 is provided, wherein ambient air is compressed using a main air compressor 12 to form a compressed ambient gas flow 26. At least a first portion of the compressed ambient gas flow 26 may be delivered to a gas turbine assembly. The at least a first portion of the compressed ambient gas flow 26 may be delivered directly to a turbine combustor 32. The at least a first portion of the compressed ambient gas flow 26 may then be mixed with at least a first portion of a recirculated low oxygen content gas flow 50 and a fuel stream 28 to form a combustible mixture. The combustible mixture may be burned in the turbine combustor 32 to produce the recirculated low oxygen content gas flow 50.

In this embodiment, a turbine 34 may be driven using the recirculated low oxygen content gas flow 50, thereby causing the turbine 34 to rotate. As used herein, the term "driven using the recirculated low oxygen content gas flow" means the recirculated low oxygen content gas flow 50 expands upon exit from the turbine combustor 32 and upon entrance into the turbine 34, thereby causing the turbine 34 to rotate.

In this embodiment, rotation of the turbine 34 may cause the turbine shaft 22 and also the turbine compressor 30 to rotate. The turbine shaft 22 may rotate in the turbine generator 20, such that rotation of the turbine shaft 22 may cause the turbine generator 20 to generate electricity. In this embodiment, the turbine compressor 30 may be fluidly connected to the turbine combustor 32 such that the turbine compressor 30 may compress and deliver the recirculated low oxygen content gas flow 50 to the turbine combustor 32.

As illustrated in FIG. 1, in some embodiments, the turbine shaft 22 may be a "cold-end drive" configuration, meaning the turbine shaft 22 may connect to the turbine generator 20 at the compressor end of the turbine assembly. In other embodiments, the turbine shaft 22 may be a "hot-end drive" configuration, meaning the turbine shaft 22 may connect to the turbine generator 20 at the turbine end of the turbine assembly.

In this embodiment, the recirculated low oxygen content gas flow 50 may be directed from the turbine 34 through the recirculation loop 52 to a heat recovery steam generator 36 for the generation of steam. A steam turbine may be configured to generate additional electricity using the steam from the heat recovery steam generator 36, and the steam turbine may be connected to a steam generator. In some embodiments, the steam turbine may be arranged to be connected to the turbine shaft 22. The recirculated low oxygen content gas flow 50 may then be directed back into the recirculation loop 52 to a recirculated gas flow cooler 40. In still other embodiments, the recirculation loop 52 may not contain a heat recovery steam generator 36 and the recirculated low oxygen content gas flow 50 may instead be introduced directly into the recirculated gas flow cooler 40 upon exit from the turbine 34. In other embodiments, the recirculation loop 52 may not comprise the recirculated gas flow cooler 40.

The recirculated gas flow cooler 40 may be incorporated into the recirculation loop 52 anywhere downstream from the turbine 34. The recirculated gas flow cooler 40 may be configured to lower the temperature of the recirculated low oxygen content gas flow 50 to a suitable temperature for downstream delivery into the turbine compressor 30 via the recirculation loop 52. In some embodiments, a suitable temperature may be below about 66 °C, below about 49 °C, or below about 45 °C.

In this embodiment, at least a second portion of the recirculated low oxygen content gas flow 50 may bleed from the gas turbine assembly to the input of the main air compressor 12. The bleed flow may be delivered to the main air compressor 12 via an integrated inlet bleed heat conduit 44 that fluidly connects the gas turbine assembly to the input of the main air compressor 12. The flow of the at least a second portion of the recirculated low oxygen content gas flow 50 through the integrated inlet bleed heat conduit 44 may be regulated by an adjustable integrated inlet bleed heat valve 43.

As depicted in FIG. 1, the integrated inlet bleed heat conduit 44 may fluidly connect an output of the turbine compressor 30 to the input of the main air compressor 12. Turning now to FIG. 2, in another embodiment the integrated inlet bleed heat conduit 44 may fluidly connect at least one point in the recirculation loop 52 to the input of the main air compressor 12. In some embodiments, the integrated inlet bleed heat conduit 44 may be connected to the recirculation loop 52 at a point that is upstream of the recirculated gas flow cooler 40. In some embodiments, the integrated inlet bleed heat conduit 44 may be connected to the recirculation loop 52 at a point that is upstream of the heat recovery steam generator 36.

In some embodiments, the gas turbine assembly further comprises a secondary flow path 31 that delivers at least a third portion of the recirculated low oxygen content gas flow 50 from the turbine compressor 30 to the turbine 34 as a secondary flow. The secondary flow may be used to cool and seal the turbine 34, including individual components of the turbine 34 such as the turbine shroud, the turbine nozzle, the turbine blade tip, the turbine bearing support housing, and the like. After cooling and sealing the turbine 34 and any individual turbine components, the secondary flow may be directed into the recirculation loop 52 near the output of the turbine 34.

In some embodiments, the at least a fourth portion of the recirculated low oxygen content gas flow 50 may bypass the turbine combustor 32 using the turbine bypass conduit 49. The turbine bypass conduit 49 may deliver the bypass flow of the at least a fourth portion of the recirculated low oxygen content gas flow 50 to the recirculation loop 52.

In embodiments, at least a fifth portion of the recirculated low oxygen content gas flow 50 may be extracted from that gas turbine assembly using the recirculated gas flow extraction valve 45 located downstream of the turbine compressor 30 via a turbine compressor output flow 41. In some embodiments, the recirculated gas flow extraction valve 45 may be fluidly connected to the turbine bypass conduit 49. In other embodiments, the recirculated gas flow extraction valve may be fluidly connected to the turbine bypass conduit 49 at a point that is either upstream or downstream from the turbine bypass valve 47. In some embodiments, the recirculated gas flow extraction valve 45 may be fluidly connected to a gas separation system such as a carbon capture sequestration (CCS) system via an exhaust gas extraction point 48. In still other embodiments, the gas separation system may produce a stream of concentrated carbon dioxide and concentrated nitrogen, both with a low oxygen content.

In some embodiments, the at least a first portion of the compressed ambient gas flow 26 may be further compressed by a booster compressor 24. The booster compressor 24 may be incorporated downstream from and in fluid connection with the main air compressor 12 and upstream of an in fluid connection with the turbine combustor 32.

In another embodiment, a method for operating a power plant arrangement 10 is provided, wherein the slave gas turbine assembly is also operated. At least a second portion of the compressed ambient gas flow 66 may be delivered to a slave gas turbine assembly. The at least a second portion of the compressed ambient gas flow 66 may be delivered directly to a slave turbine combustor 72. The at least a second portion of the compressed ambient gas flow 66 may then be mixed with at least a first portion of a slave recirculated low oxygen content gas flow 90 and a slave fuel stream 68 to form a slave combustible mixture. The slave combustible mixture may be burned in the slave turbine combustor 72 to produce the slave recirculated low oxygen content gas flow 90.

In this embodiment, a slave turbine 74 may be driven using the slave recirculated low oxygen content gas flow 90, thereby causing the slave turbine 74 to rotate. As used herein, the term "driven using the slave recirculated low oxygen content gas flow" means the slave recirculated low oxygen content gas flow 90 expands upon exit from the slave turbine combustor 72 and upon entrance into the slave turbine 74, thereby causing the slave turbine 74 to rotate.

In this embodiment, rotation of the slave turbine 74 may cause the slave turbine shaft 62 and also the slave turbine compressor 70 to rotate. The slave turbine shaft 62 may rotate in the slave turbine generator 60, such that rotation of the slave turbine shaft 62 may cause the slave turbine generator 60 to generate electricity. In this embodiment, the slave turbine compressor 70 may be fluidly connected to the slave turbine combustor 72 such that the slave turbine compressor 70 may compress and deliver the slave recirculated low oxygen content gas flow 90 to the slave turbine combustor 72.

As illustrated in FIG. 1, in some embodiments, the slave turbine shaft 62 may be a "cold-end drive" configuration, meaning the slave turbine shaft 62 may connect to the slave turbine generator 60 at the compressor end of the turbine assembly. In other embodiments, the slave turbine shaft 62 may be a "hot-end drive" configuration, meaning the slave turbine shaft 62 may connect to the slave turbine generator 60 at the turbine end of the turbine assembly.

In some embodiments, the slave recirculated low oxygen content gas flow 90 may be directed from the slave turbine 74 through the slave recirculation loop 92 to a slave heat recovery steam generator 76 for the generation of steam. A slave steam turbine may be configured to generate additional electricity using the steam from the slave heat recovery steam generator 76, and the slave steam turbine may be connected to a slave steam generator. In some embodiments, the slave steam turbine may be arranged to be connected to the slave turbine shaft 62. The slave recirculated low oxygen content gas flow 90 may then be directed back into the slave recirculation loop 92 to a slave recirculated gas flow cooler 80. In still other embodiments, the slave recirculation loop 92 may not contain a slave heat recovery steam generator 76 and the slave recirculated low oxygen content gas flow 90 may instead be introduced directly into the slave recirculated gas flow cooler 80 upon exit from the slave turbine 74. In other embodiments, the slave recirculation loop 92 may not comprise the slave recirculated gas flow cooler 80.

The slave recirculated gas flow cooler 80 may be incorporated into the slave recirculation loop 92 anywhere downstream from the slave turbine 74. The slave recirculated gas flow cooler 80 may be configured to lower the temperature of the slave recirculated low oxygen content gas flow 90 to a suitable temperature for downstream delivery into the slave turbine compressor 70 via the slave recirculation loop 92. In some embodiments, a suitable temperature may be below about 66 °C, below about 49 °C, or below about 45 °C.

In this embodiment, at least a second portion of the slave recirculated low oxygen content gas flow 90 may bleed from the slave gas turbine assembly to the input of the main air compressor 12. The slave bleed flow may be delivered to the main air compressor 12 via a slave integrated inlet bleed heat conduit that fluidly connects the slave gas turbine assembly to the input of the main air compressor 12. The flow of the at least a second portion of the slave recirculated low oxygen content gas flow 90 through the slave integrated inlet bleed heat conduit may be regulated by a slave adjustable integrated inlet bleed heat valve.

In some embodiments, the slave integrated inlet bleed heat conduit may fluidly connect an output of the slave turbine compressor 70 to the input of the main air compressor 12. In another embodiment, the slave integrated inlet bleed heat conduit may fluidly connect at least one point in the slave recirculation loop 92 to the input of the main air compressor 12. In some embodiments, the slave integrated inlet bleed heat conduit may be connected to the slave recirculation loop 92 at a point that is upstream of the slave recirculated gas flow cooler 80. In some embodiments, the slave integrated inlet bleed heat conduit may be connected to the slave recirculation loop 92 at a point that is upstream of the slave heat recovery steam generator 76.

In some embodiments, the gas turbine assembly further comprises a slave secondary flow path 71 that delivers at least a third portion of the slave recirculated low oxygen content gas flow 90 from the slave turbine compressor 70 to the slave turbine 74 as a slave secondary flow. The slave secondary flow may be used to cool and seal the slave turbine 74, including individual components of the slave turbine 74 such as the turbine shroud, the turbine nozzle, the turbine blade tip, the turbine bearing support housing, and the like. After cooling and sealing the slave turbine 74 and any individual turbine components, the slave secondary flow may be directed into the slave recirculation loop 92 near the output of the slave turbine 74.

In some embodiments, at least a fourth portion of the slave recirculated low oxygen content gas flow 90 may bypass the slave turbine combustor 72 using the slave turbine bypass conduit 89. The slave turbine bypass conduit 89 may deliver the slave bypass flow of the at least a fourth portion of the slave recirculated low oxygen content gas flow 90 to the slave recirculation loop 92.

In some embodiments, at least a fifth portion of the slave recirculated low oxygen content gas flow 90 may be extracted from the slave gas turbine assembly using the slave recirculated gas flow extraction valve 85 located downstream of the slave turbine compressor 70 via a slave turbine compressor output flow 81. In some embodiments, the slave recirculated gas flow extraction valve 85 may be fluidly connected to the slave turbine bypass conduit 89. In other embodiments, the slave recirculated gas flow extraction valve may be fluidly connected to the slave turbine bypass conduit 89 at a point that is either upstream of or downstream of the slave turbine bypass valve 87. In some embodiments, the slave recirculated gas flow extraction valve 85 may be fluidly connected to a slave gas separation system such as a slave carbon capture sequestration (CCS) system via a slave exhaust gas extraction point 88. In still other embodiments, the slave gas separation system may produce a stream of concentrated carbon dioxide and concentrated nitrogen, both with a low oxygen content.

In some embodiments, the at least a second portion of the compressed ambient gas flow 66 may be further compressed by a slave booster compressor 64. The slave booster compressor 64 may be incorporated downstream of and in fluid connection with the main air compressor 12 and upstream of an in fluid connection with the slave turbine combustor 72.

In some embodiments, the method comprises operating a power plant arrangement that comprises one gas turbine assembly. In other embodiments, the method comprises operating a power plant arrangement that comprises two or more gas turbine assemblies that are fluidly connected by the inter-train conduit 19. In still other embodiments, the method comprises operating a power plant arrangement that comprises three or more gas turbine assemblies and one or more additional main air compressors, wherein the additional main air compressors are in fluid connection with each other and with the gas turbine assemblies. In yet other embodiments, the method comprises operating a power plant arrangement that is configured for substantially stoichiometric combustion. In still other embodiments, the method comprises operating a power plant arrangement that is configured for substantially zero emissions power production.

Other configurations and methods of operation are provided by U.S. Patent Applications including "Power Plant and Method of Operation" to Daniel Snook, Lisa Wichmann, Sam Draper, Noemie Dion Ouellet, and Scott Rittenhouse (filed August 25, 2011), "Power Plant and Method of Operation" to Daniel Snook, Lisa Wichmann, Sam Draper, Noemie Dion Ouellet, and Scott Rittenhouse (filed August 25, 2011), "Power Plant Start-Up Method" to Daniel Snook, Lisa Wichmann, Sam Draper, Noemie Dion Ouellet, and Scott Rittenhouse (filed August 25, 2011), "Power Plant and Control Method" to Daniel Snook, Lisa Wichmann, Sam Draper, and Noemie Dion Ouellet (filed August 25, 2011), "Power Plant and Method of Operation" to Predrag Popovic (filed August 25, 2011), "Power Plant and Method of Operation" to Sam Draper and Kenneth Kohl (filed August 25, 2011), "Power Plant and Method of Operation" to Sam Draper (filed August 25, 2011), "Power Plant and Method of Operation" to Sam Draper (filed August 25, 2011), "Power Plant and Method of Use" to Daniel Snook, Lisa Wichmann, Sam Draper, and Noemie Dion Ouellet (filed August 25, 2011), and "Power Plant and Control Method" to Karl Dean Minto (filed August 25, 2011), the disclosures of which are incorporated by reference herein.

Various aspects and embodiments of the present invention are defined by the following numbered clauses:
1. A power plant arrangement, comprising:
   at least one main air compressor for compressing ambient air into a compressed ambient gas flow; and
   at least one gas turbine assembly comprising:
      a turbine combustor, fluidly connected to the at least one main air compressor, for mixing at least a first portion of the compressed ambient gas flow with at least a first portion of a recirculated low oxygen content gas flow and a fuel stream to form a combustible mixture and for burning the combustible mixture and forming the recirculated low oxygen content gas flow;
      a turbine connected to the turbine combustor and to a turbine shaft, and being arranged to be driven by the recirculated low oxygen content gas flow from the turbine combustor;
      a turbine compressor, fluidly connected to the turbine combustor, and connected to the turbine shaft and being arranged to be driven thereby;
      a recirculation loop for recirculating of the recirculated low oxygen content gas flow from the turbine to the turbine compressor; and
      an integrated inlet bleed heat conduit, fluidly connecting the at least one gas turbine assembly to an input of the at least one main air compressor, for delivering at least a second portion of the recirculated low oxygen content gas flow from the at least one gas turbine assembly to the input of the at least one main air compressor.
2. The power plant arrangement of clause 1, wherein the integrated inlet bleed heat conduit is regulated by an adjustable integrated inlet bleed heat valve.
3. The power plant arrangement of clause 1, wherein the integrated inlet bleed heat conduit fluidly connects an output of the turbine compressor to the input of the at least one main air compressor.
4. The power plant arrangement of clause 1, wherein the integrated inlet bleed heat conduit fluidly connects at least one point in the recirculation loop to the input of the at least one main air compressor.
5. The power plant arrangement of clause 4, wherein the integrated inlet bleed heat conduit is connected to the recirculation loop at a point that is upstream from a recirculated gas flow cooler.
6. The power plant arrangement of clause 1, wherein the at least one gas turbine assembly further comprises a booster compressor for further compressing the at least a first portion of the compressed ambient gas flow.
7. The power plant arrangement of clause 1, wherein the at least one gas turbine assembly further comprises a heat recovery steam generator in the recirculation loop, configured to receive the recirculated low oxygen content gas flow from the turbine for the generation of electricity using a steam turbine and a steam generator.
8. The power plant arrangement of clause 7, wherein the integrated inlet bleed heat conduit fluidly connects the recirculation loop to the input of the at least one main air compressor and the integrated inlet bleed heat conduit is connected to the recirculation loop at a point that is upstream of the heat recovery steam generator.
9. The power plant arrangement of clause 1, wherein the at least one gas turbine assembly further comprises a secondary flow path that delivers at least a third portion of the recirculated low oxygen content gas flow from the turbine compressor to the turbine as a secondary flow, and the secondary flow is further delivered into the recirculation loop after cooling and sealing the turbine.
10. The power plant arrangement of clause 1, wherein the power plant is configured for substantially stoichiometric combustion.
11. A method for operating a power plant, comprising:
   compressing ambient air with at least one main air compressor to form a compressed ambient gas flow;
   delivering at least a first portion of the compressed ambient gas flow to a turbine combustor of at least one gas turbine assembly;
   mixing the at least a first portion of the compressed ambient gas flow with at least a first portion of a recirculated low oxygen content gas flow and a fuel stream to form a combustible mixture and burning the combustible mixture in the turbine combustor to produce the recirculated low oxygen content gas flow;
   driving a turbine using the recirculated low oxygen content gas flow, wherein the turbine is connected to a turbine shaft;
   driving a turbine compressor, that is fluidly connected to the turbine combustor, via rotation of the turbine shaft;
   recirculating the recirculated low oxygen content gas flow from the turbine to the turbine compressor using a recirculation loop; and bleeding at least a second portion of the recirculated low oxygen content gas flow from the at least one gas turbine assembly to an input of the at least one main air compressor via an integrated inlet bleed heat conduit that fluidly connects the at least one gas turbine assembly to the input of the at least one main air compressor.
12. The method of clause 11, further comprising regulating the bleeding of the at least a second portion of the recirculated oxygen content gas flow with an adjustable integrated inlet bleed heat valve.
13. The method of clause 11, wherein the integrated inlet bleed heat conduit fluidly connects an output of the turbine compressor to the input of the at least one main air compressor.
14. The method of clause 11, wherein the integrated inlet bleed heat conduit fluidly connects at least one point in the recirculation loop to the input of the at least one main air compressor.
15. The method of clause 14, wherein the integrated inlet bleed heat conduit is connected to the recirculation loop at a point that is upstream of a recirculated gas flow cooler.
16. The method of clause 11, wherein the at least one gas turbine assembly each further comprises a booster compressor for further compressing the compressed ambient gas flow.
17. The method of clause 11, further comprising passing the recirculated low oxygen content gas flow through a heat recovery steam generator located in the recirculation loop and configured to generate electricity using a steam turbine and a steam generator.
18. The method of clause 17, wherein the integrated inlet bleed heat conduit fluidly connects the recirculation loop to the input of the at least one main air compressor and the integrated inlet bleed heat conduit is connected to the recirculation loop at a point that is upstream of the heat recovery steam generator.
19. The method of clause 11, further comprising delivering at least a third portion of the recirculated low oxygen content gas flow from the turbine compressor to the turbine as a secondary flow using a secondary flow path, wherein the secondary flow is further delivered into the recirculation loop after cooling and sealing the turbine.
20. The method of clause 11, further comprising generating electricity with substantially stoichometric combustion.

## Claims

1. A power plant arrangement, comprising:
at least one main air compressor (12) for compressing ambient air into a compressed ambient gas flow (26); and
at least one gas turbine assembly comprising:
a turbine combustor (32), fluidly connected to the at least one main air compressor (12), for mixing at least a first portion of the compressed ambient gas flow (26) with at least a first portion of a recirculated low oxygen content gas flow (50) and a fuel stream (28) to form a combustible mixture and for burning the combustible mixture and forming the recirculated low oxygen content gas flow (50);
a turbine (34) connected to the turbine combustor (32) and to a turbine shaft (22), and being arranged to be driven by the recirculated low oxygen content gas flow (50) from the turbine combustor (32);
a turbine compressor (30), fluidly connected to the turbine combustor (32), and connected to the turbine shaft (22) and being arranged to be driven thereby;
a recirculation loop (52) for recirculating of the recirculated low oxygen content gas flow (50) from the turbine (34) to the turbine compressor (30); and
an integrated inlet bleed heat conduit (44), fluidly connecting the at least one gas turbine assembly to an input of the at least one main air compressor (12), for delivering at least a second portion of the recirculated low oxygen content gas flow (50) from the at least one gas turbine assembly to the input of the at least one main air compressor (12).

2. The power plant arrangement of claim 1, wherein the integrated inlet bleed heat conduit is regulated by an adjustable integrated inlet bleed heat valve.

3. The power plant arrangement of claim 1 or claim 2, wherein the integrated inlet bleed heat conduit fluidly connects an output of the turbine compressor to the input of the at least one main air compressor.

4. The power plant arrangement of any preceding claim, wherein the integrated inlet bleed heat conduit (44) fluidly connects at least one point in the recirculation loop (52) to the input of the at least one main air compressor (12).

5. The power plant arrangement of claim 4, wherein the integrated inlet bleed heat conduit is connected to the recirculation loop at a point that is upstream from a recirculated gas flow cooler.

6. The power plant arrangement of any preceding claim, wherein the at least one gas turbine assembly further comprises a booster compressor for further compressing the at least a first portion of the compressed ambient gas flow.

7. The power plant arrangement of any preceding claim, wherein the at least one gas turbine assembly further comprises a heat recovery steam generator (36) in the recirculation loop (52), configured to receive the recirculated low oxygen content gas flow (50) from the turbine (34) for the generation of electricity using a steam turbine and a steam generator.

8. The power plant arrangement of claim 7, wherein the integrated inlet bleed heat conduit fluidly connects the recirculation loop to the input of the at least one main air compressor and the integrated inlet bleed heat conduit is connected to the recirculation loop at a point that is upstream of the heat recovery steam generator.

9. The power plant arrangement of any preceding claim, wherein the at least one gas turbine assembly further comprises a secondary flow path (31) that delivers at least a third portion of the recirculated low oxygen content gas flow (50) from the turbine compressor (30) to the turbine (34) as a secondary flow, and the secondary flow is further delivered into the recirculation loop (52) after cooling and sealing the turbine (34).

10. The power plant arrangement of any preceding claim, wherein the power plant is configured for substantially stoichiometric combustion.

11. A method for operating a power plant, comprising:
compressing ambient air with at least one main air compressor (12) to form a compressed ambient gas flow (26);
delivering at least a first portion of the compressed ambient gas flow (26) to at least one gas turbine assembly;
mixing the at least a first portion of the compressed ambient gas flow (26) with at least a first portion of a recirculated low oxygen content gas flow (50) and a fuel stream (28) to form a combustible mixture and burning the combustible mixture in a turbine combustor (32) to produce the recirculated low oxygen content gas flow (50);
driving a turbine (34) using the recirculated low oxygen content gas flow (50);
driving a turbine compressor (30) fluidly connected to the turbine combustor (32);
recirculating the recirculated low oxygen content gas flow (50) from the turbine (34) to the turbine compressor (32) using a recirculation loop (52); and
bleeding at least a second portion of the recirculated low oxygen content gas flow (50) from the at least one gas turbine assembly to an input of the at least one main air compressor (12), via a integrated inlet bleed heat conduit (44) that fluidly connects the at least one gas turbine assembly to the input of the at least one main air compressor (12).

12. The method of claim 11, wherein the integrated inlet bleed heat conduit (44) fluidly connects at least one point in the recirculation loop (52) to the input of the at least one main air compressor (12).

13. The method of claim 11 or claim 12, further comprising passing the recirculated low oxygen content gas flow (50) through a heat recovery steam generator (36) located in the recirculation loop (52) and configured to generate electricity using a steam turbine and a steam generator.

14. The method of any one of claims 11 to 13, further comprising delivering at least a third portion of the recirculated low oxygen content gas flow (50) from the turbine compressor (30) to the turbine (34) as a secondary flow using a secondary flow path (31), wherein the secondary flow is further delivered into the recirculation loop (52) after cooling and sealing the turbine.

15. The method of any one of claims 11 to 14, further comprising generating electricity with substantially stoichometric combustion.
